# EUROPÄISCHE PATENTSCHRIFT

(11) **EP 1 926 909 B1**
(45) Veröffentlichungstag und Bekanntmachung des Hinweises auf die Patenterteilung: **02.05.2018**
(21) Anmeldenummer: 06792948.9
(22) Anmeldetag: 22.08.2006
(51) Int. Cl.: F04B 1/04

(54) **KOLBENPUMPE MIT REDUZIERTEM SCHADRAUM**
PISTON PUMP WITH REDUCED CLEARANCE VOLUME
POMPE A PISTON A ESPACE MORT REDUIT

(30) Priorität: 06.09.2005 DE 102005042196
(43) Veröffentlichungstag der Anmeldung: 04.06.2008
(73) Patentinhaber: ROBERT BOSCH GMBH, 70442 Stuttgart (DE)
(72) Erfinder: ZIMMERMANN, Marc, 71720 Oberstenfeld (DE)
(86) Internationale Anmeldenummer: PCT/EP2006/065564
(87) Internationale Veröffentlichungsnummer: WO 2007/028707

(56) Entgegenhaltungen:
- EP-A- 1 275 845
- US-A1- 2004 105 763
- US-B1- 6 267 569

## Beschreibung

### Stand der Technik

Die vorliegende Erfindung betrifft eine Kolbenpumpe mit reduziertem Schadraum, so dass ein Wirkungsgrad der Kolbenpumpe erhöht werden kann. Die erfindungsgemäße Kolbenpumpe wird insbesondere in Bremsanlagen von Fahrzeugen mit aktivem Druckaufbau verwendet.

Kolbenpumpen nach den Merkmalen des Oberbegriffs des Anspruchs 1 sind aus dem Stand der Technik in unterschiedlichen Ausgestaltungen bekannt. Diesbezüglich wird auf die US 6,267,569 B1, die EP 1275 845 A2 und die US 2004/0105763 A1 hingewiesen. Die daraus bekannten Kolbenpumpen weisen Kolben auf, die als massive Bauteile ausgeführt sind und somit nicht von Fluid durchströmbar sind. Ferner sind die Einlassventile dieser Kolbenpumpen fest im Zylinder verankert und folgen somit der Hubbwegung des Kolbens nicht. Dies führt zu Kolbenpumpen mit einem relativ großen Abmessungen und hohem Bau- bzw. Montageaufwand. Aufgrund ihrer Bauweise sind die bekannten Kolbenpumpen hinsichtlich ihres Schadvolumens und ihres Wirkungsgrads nicht optimiert.

Kolbenpumpen, welche insbesondere in Bremsanlagen von Fahrzeugen verwendet werden, müssen ein möglichst geringes Gewicht und einen möglichst kompakten Aufbau aufweisen. Hierbei sind Kolbenpumpen bekannt, welche ein Fluid durch den Kolben hindurch in einen Druckraum ansaugen und den Druck des angesaugten Fluids im Druckraum erhöhen. Der Druckraum ist dabei in einem Zylinder angeordnet, welcher eine Zylinderinnenbohrung mit konstantem Durchmesser aufweist. Ein Auslass aus dem Druckraum ist im Boden des Zylinders vorgesehen. Neben einem Rückstellelement für den Kolben ist im Druckraum weiterhin noch ein Rückschlagventil für das Verschließen bzw. Freigeben einer im Kolben vorgesehenen Einlassöffnung angeordnet. Grundsätzlich haben sich derartige Kolbenpumpen bewährt, es wäre jedoch wünschenswert, den Wirkungsgrad derartiger Kolbenpumpen weiter zu erhöhen und insbesondere den Schadraum zu reduzieren.

### Vorteile der Erfindung

Die erfindungsgemäße Kolbenpumpe zur Förderung eines Fluids mit den Merkmalen des Patentanspruches 1 weist demgegenüber den Vorteil auf, dass sie einen verbesserten Wirkungsgrad hat. Dies wird erfindungsgemäß dadurch erreicht, dass ein Schadraum der Kolbenpumpe reduziert wird. Weiterhin kann die erfindungsgemäße Kolbenpumpe kostengünstig hergestellt und montiert werden und weist eine unkomplizierte Geometrie für eine Fertigung auf. Dies wird erfindungsgemäß dadurch erreicht, dass ein im Zylinder ausgebildeter Druckraum der Kolbenpumpe einen ersten Bereich mit einem ersten Innendurchmesser und einen zweiten Bereich mit einem zweiten Innendurchmesser aufweist. Dabei ist der erste Innendurchmesser größer als der zweite Innendurchmesser. Durch die Verwendung des zweiten Bereichs mit kleinerem Innendurchmesser kann der Schadraum im Vergleich mit den bekannten Kolbenpumpen signifikant reduziert werden. Ferner ist es möglich, bei einem gleichen Zylinderaußenumfang einen größeren Durchmesser für den Kolben zu wählen. Es ist damit ferner möglich, in bestehenden Systemen größere Pumpen einzusetzen.

Die Unteransprüche zeigen bevorzugte Weiterbildungen der Erfindung.

Vorzugsweise erfolgt ein Hub des Kolbens im ersten Bereich des Zylinders mit größerem Durchmesser. Dadurch kann ein Durchmesser des Kolbens vergrößert werden.

Weiter bevorzugt ist der erste Bereich des Zylinders ein Hubbereich des Kolbens, in welchem sich der Kolben zwischen oberem und unterem Totpunkt bewegt. Die Länge des ersten Bereichs des Zylinders in Axialrichtung des Zylinders kann dabei gleich der maximalen Bewegungslänge des Kolbens zwischen oberem und unterem Totpunkt sein, wodurch der Schadraum weiter optimiert wird. Alternativ kann die Bewegungslänge des Kolbens zwischen oberem und unterem Totpunkt etwas kleiner als die Axiallänge des ersten Bereichs des Zylinders sein.

Weiter bevorzugt ist der zweite Bereich des Zylinders unmittelbar im Anschluss an einen Zylinderboden angeordnet.

Vorzugsweise liegt ein oberer Totpunkt des Kolbens an einem Verbindungsbereich zwischen dem ersten und zweiten Bereich des Zylinders.

Um eine möglichst strömungsgünstige Ausgestaltung und insbesondere eine einfache Herstellung des Verbindungsbereichs zu ermöglichen, ist der Verbindungsbereich zwischen dem ersten und zweiten Bereich des Zylinders als sich verjüngender Absatz, insbesondere mit gleich bleibender Steigung, gebildet.

Ein Winkel des als sich verjüngender Absatz ausgebildeten Verbindungsbereichs vom ersten zum zweiten Bereich des Zylinders zu einer Längsachse des Zylinders liegt vorzugsweise zwischen 10° und 80°, insbesondere zwischen 20° und 50°, und beträgt besonders bevorzugt 30° oder 45°. Hierbei sind insbesondere Winkel mit 30° bzw. 45° besonders einfach und kostengünstig ohne Spezialwerkzeuge herstellbar. Gemäß einer weiteren bevorzugten Ausgestaltung der Erfindung ist im zweiten Bereich des Zylinders eine Ausnehmung gebildet, um das Rückstellelement für den Kolben zu fixieren.

Die Ausnehmung ist vorzugsweise eine ringförmige Nut. Die ringförmige Nut verläuft besonders bevorzugt unmittelbar benachbart zu dem Zylinderboden des Zylinders.

Die erfindungsgemäße Kolbenpumpe wird besonders bevorzugt in einer Bremsanlage für Fahrzeuge verwendet. Vorzugsweise ist die Bremsanlage eine Anlage mit aktivem Druckaufbau, wie beispielsweise mit einem ABS-, ESP-, oder TCS-System. Auch kann die erfindungsgemäße Kolbenpumpe in automatisierten Parkbremsen, z.B. EHB-Systemen, verwendet werden.

### Zeichnung

Nachfolgend wird die vorliegende Erfindung unter Bezugnahme auf die begleitende Zeichnung im Detail beschrieben. In der Zeichnung ist:
- Figur 1: eine schematische Schnittansicht einer Kolbenpumpe gemäß einem Ausführungsbeispiel der vorliegenden Erfindung und
- Figur 2: eine schematische Schnittansicht eines in Figur 1 gezeigten Zylinders.

### Beschreibung des Ausführungsbeispiels

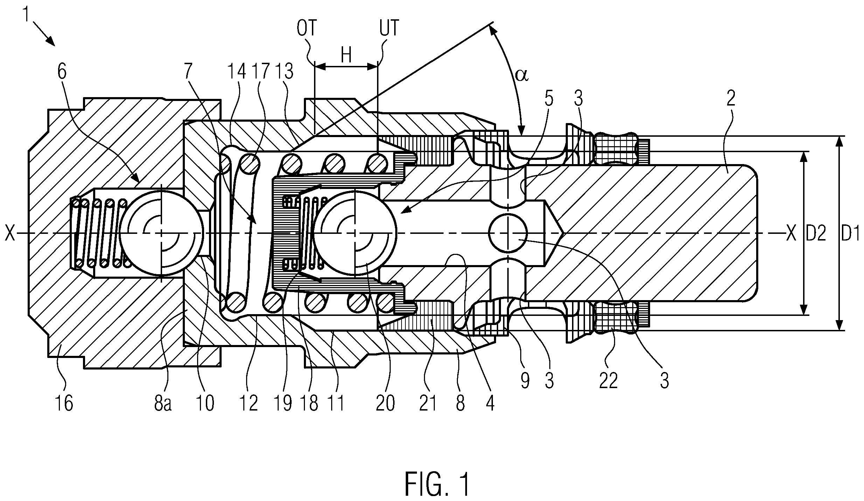

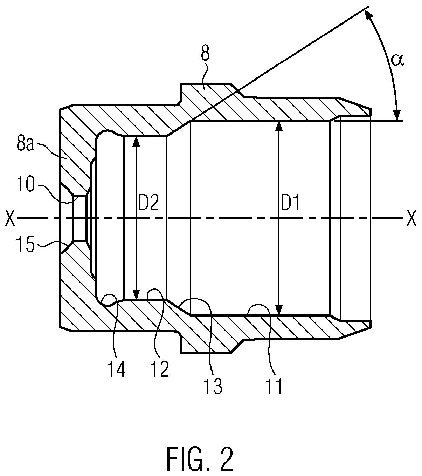

Nachfolgend wird unter Bezugnahme auf die Figuren 1 und 2 ein Ausführungsbeispiel der Erfindung im Detail beschrieben.

Wie aus Figur 1 ersichtlich ist, umfasst die erfindungsgemäße Kolbenpumpe 1 einen Kolben 2, welcher in einem Zylinder 8 hin- und her-bewegbar angeordnet ist. Der Kolben 2 wird mittels eines nicht dargestellten Antriebs, wie z.B. einem Exzenterantrieb, angetrieben. Im Kolben 2 sind mehrere Querbohrungen 3 und eine Längsbohrung 4 vorgesehen, in welche die Querbohrungen 3 münden. Fluid wird radial durch einen Filter 9 in die Querbohrungen 3 und dann in die Längsbohrung 4 zugeführt.

Die Kolbenpumpe 1 umfasst weiter einen Druckraum 7, welcher im Zylinder 8 angeordnet ist. Ein Einlassventil 5, welches ein Käfigelement 18, eine Feder 19 und eine Kugel 20 umfasst, verschließt die Längsbohrung 4 und ein Auslassventil 6 ist an einer im Zylinder gebildeten Auslassöffnung 10 angeordnet. Das Einlassventil 5 und das Auslassventil 6 sind somit jeweils als Rückschlagventile ausgebildet. Wie in Figur 1 gezeigt, ist das Auslassventil 6 dabei in einem Deckelelement 16 angeordnet.

Der Kolben 2 ist mittels eines Dichtelements 21 gegenüber dem Zylinder 8 abgedichtet. Das Bezugszeichen 22 bezeichnet ein weiteres Dichtelement am Kolben. Im Druckraum 7 ist weiterhin ein Rückstellelement 17 für den Kolben 2 in Form einer Spiralfeder vorgesehen. Wie aus Figur 1 ersichtlich ist, stützt sich das Rückstellelement 17 zwischen einem Boden 8a des Zylinders 8 und dem Käfigelement 18 ab.

Der Zylinder 8 ist im Detail in Figur 2 dargestellt. Wie aus Figur 2 ersichtlich ist, weist der Zylinder 8 einen ersten Bereich 11 und einen zweiten Bereich 12 auf. Der erste Bereich 11 hat einen Innendurchmesser D1 und der zweite Bereich 12 einen Innendurchmesser D2. Dabei ist der Innendurchmesser D1 größer als der Innendurchmesser D2.

Zwischen dem ersten Bereich 11 und dem zweiten Bereich 12 ist ein Übergangsbereich 13 gebildet, welcher konisch mit einer konstanten Steigung vorgesehen ist. Ein Winkel zwischen einer Längsachse X-X des Zylinders 8 und dem Übergangsbereich 13 ist dabei mit α gekennzeichnet und beträgt in diesem Ausführungsbeispiel 30°. An der Auslassöffnung 10 ist weiterhin ein Auslassventilsitz 15 vorgesehen, der entsprechend einer Kugel des Auslassventils 6 geformt ist. In der Zylinderbohrung benachbart zum Boden 8a des Zylinders 8 ist ferner eine ringförmige Ausnehmung 14 entlang des gesamten Innenumfangs des Zylinders 8 gebildet. Die ringförmige Ausnehmung 14 dient zur Fixierung des Rückstellelements 17 und zur Reduzierung der Druckspannung in der Kerbe und weist eine im Schnitt bogenförmige Form entsprechend dem Drahtquerschnitt des Rückstellelements 17 auf.

Wie aus Figur 1 ersichtlich ist, ist der Innendurchmesser D2 des zweiten Bereichs 12 etwas größer als ein Außendurchmesser des Rückstellelements 17.

Figur 1 zeigt dabei die Stellung der Kolbenpumpe 1 in ihrem unteren Totpunkt. Die Länge H in Längsrichtung X-X der Kolbenpumpe 1 zeigt dabei die maximale Hubhöhe zwischen dem unteren Totpunkt UT und dem oberen Totpunkt OT. UT und OT kennzeichnen in Figur 1 dabei die jeweilige Stellung des Kolbenendes im unter bzw. oberen Totpunkt. Wie aus Figur 1 ersichtlich ist, liegt der obere Totpunkt dabei genau am Ende des ersten Bereichs 11 im Übergang zum Übergangsbereich 13.

Die Funktion der erfindungsgemäßen Kolbenpumpe ist dabei wie folgt. Ausgehend von einer Stellung des Kolbens 2 im oberen Totpunkt OT bewegt sich der Kolben 2 durch die Rückstellkraft des Rückstellelements 17 nach rechts, wodurch sich das Einlassventil 5 öffnet. Während der Bewegung vom oberen Totpunkt OT zum unteren Totpunkt UT wird Fluid radial durch das Filter 9 und die Querbohrungen 3 angesaugt. Von den Querbohrungen 3 strömt das Fluid über die Längsbohrung 4 und das geöffnete Einlassventil 5 in den Druckraum 6. In der in Figur 1 gezeigten Stellung im unteren Totpunkt UT kehrt sich die Bewegungsrichtung des Kolbens 2 um, so dass der Kolben 2 in Richtung des Auslassventils 6 bewegt wird. Aufgrund der Umkehrung der Bewegungsrichtung schließt das Einlassventil 5, so dass ein Druckaufbau im Druckraum 7 erfolgt. Das Rückstellelement 17 wird dabei zusammengedrückt. Der Druckaufbau erfolgt dabei so lange, bis ein Druck im Druckraum 7 größer als eine Rückstellkraft der Feder des Auslassventils 6 ist. Wenn der Druck im Druckraum 7 größer als die Rückstellkraft des Auslassventils 6 ist, öffnet das Auslassventil, so dass das im Druckraum 7 unter Druck stehende Fluid über die Auslassöffnung 10 abströmen kann. Dieser Zustand ist vorzugsweise kurz vor Erreichen des oberen Totpunkts OT des Kolbens 2 erreicht.

Durch den erfindungsgemäßen Aufbau des Zylinders 8 kann nun ein Schadraum der Kolbenpumpe 1 reduziert werden. Genauer wird der Schadraum im Vergleich mit den bekannten Kolbenpumpen, welche lediglich eine Zylinderbohrung im Zylinder mit einem konstanten Durchmesser aufweisen, um einen ringförmigen Raum radial zum zweiten Bereich 12 mit einem Innendurchmesser D2 und einem Außendurchmesser D1 reduziert. Wenn beispielsweise ein Innendurchmesser D2 8 mm und ein Innendurchmesser D1 9,6 mm beträgt, wird der Schadraum der Kolbenpumpe bei einer Länge des zweiten Bereichs 12 in axialer Richtung von ca. 4 mm um 40% reduziert. Dadurch kann erfindungsgemäß ein deutlich verbesserter Wirkungsgrad der Kolbenpumpe 1 bereitgestellt werden und ein Ausgasen des Fluids reduziert werden. Dabei kann die erfindungsgemäße Durchmesserreduzierung der Zylinderbohrung am zweiten Bereich 12 sehr einfach und kostengünstig bereitgestellt werden. Insbesondere müssen dabei Außenabmessungen der Kolbenpumpe nicht verändert werden. Der Übergangsbereich 13 zwischen dem ersten und zweiten Bereich 11, 12 kann dabei beispielsweise mittels eines Senkelements oder eines Stufenbohrers ebenfalls einfach hergestellt werden.

Weiterhin kann durch die erfindungsgemäße Maßnahme eine Bauteilfestigkeit insbesondere im Bereich des Zylinderbodens 8a und den daran anschließenden Zylinderwänden, welche eine größere Dicke als die Zylinderwände im Bereich des ersten Bereichs 11 aufweist, verbessert werden.

## Patentansprüche

1. Kolbenpumpe zur Förderung eines Fluids, umfassend einen Zylinder (8), einen im Zylinder (8) bewegbar angeordneten Kolben (2), einen im Zylinder (8) angeordneten und vom Kolben (2) begrenzten Druckraum (7), ein Rückstellelement (17) für den Kolben (2) und einen Antrieb, um den Kolben (2) im Zylinder (8) zwischen einem unteren Totpunkt (UT) und einem oberten Totpunkt (OT) zu bewegen, wobei der im Zylinder (8) angeordnete Druckraum (7) einen ersten Bereich (11) mit einem ersten Innendurchmesser (D1) aufweist in dem der Kolben (2) beweglich geführt ist, und wobei der Druckraum (7) einen zweiten Bereich (12) mit einem zweiten Innendurchmesser (D2) aufweist, wobei der erste Innendurchmesser (D1) größer als der zweite Innendurchmesser (D2) ist, **dadurch gekennzeichnet, dass** ein Einlassventil (5) an dem den Druckraum (7) zugewandten Ende des Kolbens (2) angebracht ist, dass das Einlassventil (5) ein Käfigelement (18) aufweist und dass das Käfigelement (18) bei einer Bewegung des Kolbens (2) vom unteren Totpunkt (UT) zum oberen Totpunkt (OT) immer wenigstens abschnittsweise in den zweiten Bereich (12) kleineren Innendurchmessers (D2) eintaucht.

2. Kolbenpumpe nach Anspruch 1, **dadurch gekennzeichnet, dass** ein Hub (H) des Kolbens (2) in ersten Bereich (11) des Zylinders erfolgt.

3. Kolbenpumpe nach einem der vorhergehenden Ansprüche, **dadurch gekennzeichnet, dass** der erste Bereich (11) ein Hubbereich des Kolbens (2) ist, in welchem sich der Kolben (2) zwischen einem oberen Totpunkt (OT) und einem unteren Totpunkt (UT) bewegt.

4. Kolbenpumpe nach einem der vorhergehenden Ansprüche, **dadurch gekennzeichnet, dass** der zweite Bereich (12) benachbart zu einem Zylinderboden (8a) angeordnet ist.

5. Kolbenpumpe nach einem der vorhergehenden Ansprüche, **dadurch gekennzeichnet, dass** ein oberer Totpunkt (OT) des Kolbens (2) an einer Position am Übergang zwischen dem ersten Bereich (11) und einem Verbindungsbereich (13) angeordnet ist, wobei der Verbindungsbereich (13) zwischen dem ersten und zweiten Bereich (11, 12) des Zylinders (8) angeordnet ist.

6. Kolbenpumpe nach Anspruch 5, **dadurch gekennzeichnet, dass** der Verbindungsbereich (13) zwischen dem ersten und zweiten Bereich (11, 12) des Zylinders (8) als sich verjüngender Absatz ausgebildet ist.

7. Kolbenpumpe nach Anspruch 6, **dadurch gekennzeichnet, dass** der Verbindungsbereich (13) zwischen dem ersten und zweiten Bereich (11, 12) des Zylinders (8) mit einem konstanten Winkel (α) zu einer Längsachse (X-X) der Kolbenpumpe gebildet ist, wobei der Winkel (α) zwischen 10° und 80°, insbesondere zwischen 20° und 50°, und besonders bevorzugt 30° oder 45° beträgt.

8. Kolbenpumpe nach einem der vorhergehenden Ansprüche, **dadurch gekennzeichnet, dass** am zweiten Bereich (12) des Zylinders (8) eine Ausnehmung (14) gebildet ist, um das Rückstellelement (17) für den Kolben (2) zu fixieren.

9. Kolbenpumpe nach Anspruch 8, **dadurch gekennzeichnet, dass** die Ausnehmung (14) eine ringförmig umlaufende Nut ist, die unmittelbar an einen Boden (8a) des Zylinders angeordnet ist.

10. Bremsanlage für ein Fahrzeug, insbesondere mit aktivem Druckaufbau, umfassend eine Kolbenpumpe nach einem der vorhergehenden Ansprüche.

## Claims

1. Piston pump for conveying a fluid, comprising a cylinder (8), a piston (2) which is arranged movably in the cylinder (8), a pressure chamber (7) which is arranged in the cylinder (8) and which is delimited by the piston (2), a restoring element (17) for the piston (2), and a drive for moving the piston (2) in the cylinder (8) between a bottom dead centre (UT) and a top dead centre (OT) wherein
the pressure chamber (7) arranged in the cylinder (8) has a first region (11) with a first internal diameter (D1) in which the piston (2) is movably guided and wherein
the pressure chamber (7) has a second region (12) with a second internal diameter (D2), wherein the first internal diameter (D1) is greater than the second internal diameter (D2),
**characterized**
**in that** an inlet valve (5) is fitted on that end of the piston (2) which faces toward the pressure chamber (7),
**in that** the inlet valve (5) has a cage element (18), and in that the cage element (18) always protrudes at least in sections into the second region (12) of relatively small internal diameter (D2) during a movement of the piston (2) from the bottom dead centre (UT) to the top dead centre (OT) .

2. Piston pump according to Claim 1, **characterized in that** a stroke (H) of the piston (2) takes place in the first region (11) of the cylinder.

3. Piston pump according to one of the preceding claims, **characterized in that** the first region (11) is a stroke region of the piston (2) in which the piston (2) moves between a top dead centre (OT) and a bottom dead centre (UT).

4. Piston pump according to one of the preceding claims, **characterized in that** the second region (12) is arranged adjacent to a cylinder base (8a).

5. Piston pump according to one of the preceding claims, **characterized in that** a top dead centre (OT) of the piston (2) is arranged at a position at the transition between the first region (11) and a connecting region (13), wherein the connecting region (13) is arranged between the first and second regions (11, 12) of the cylinder (8) .

6. Piston pump according to Claim 5, **characterized in that** the connecting region (13) between the first and second regions (11, 12) of the cylinder (8) is formed as a tapering shoulder.

7. Piston pump according to Claim 6, **characterized in that** the connecting region (13) between the first and second regions (11, 12) of the cylinder (8) is formed with a constant angle (α) with respect to a longitudinal axis (X-X) of the piston pump, wherein the angle (α) amounts to between 10° and 80°, in particular between 20° and 50°, and particularly preferably 30° or 45°.

8. Piston pump according to one of the preceding claims, **characterized in that**, on the second region (12) of the cylinder (8), there is formed a recess (14) for fixing the restoring element (17) for the piston (2).

9. Piston pump according to Claim 8, **characterized in that** the recess (14) is a ring-shaped encircling groove which is arranged directly at a base (8a) of the cylinder.

10. Brake system for a vehicle, in particular with active pressure build-up, comprising a piston pump according to one of the preceding claims.

## Revendications

1. Pompe à piston pour le transport d'un fluide, comprenant un cylindre (8), un piston (2) disposé de façon déplaçable dans le cylindre (8), une chambre de pression (7) disposée dans le cylindre (8) et limitée par le piston (2), un élément de rappel (17) pour le piston (2) et un entraînement, destiné à déplacer le piston (2) dans le cylindre (8) entre un point mort inférieur (UT) et un point mort supérieur (OT),
dans laquelle la chambre de pression (7) disposée dans le cylindre (8) présente une première région (11) avec un premier diamètre intérieur (D1) dans laquelle le piston (2) est guidé en mouvement
et dans laquelle la chambre de pression (7) présente une deuxième région (12) avec un deuxième diamètre intérieur (D2), dans laquelle le premier diamètre intérieur (D1) est plus grand que le deuxième diamètre intérieur (D2), **caractérisée en ce**
**qu'**une soupape d'admission (5) est installée sur l'extrémité du piston (2) tournée vers la chambre de pression (7),
la soupape d'admission (5) présente un élément de cage (18), et
l'élément de cage (18) plonge toujours au moins en partie dans la deuxième région (12) de plus petit diamètre intérieur (D2) lors d'un déplacement du piston (2) du point mort inférieur (UT) au point mort supérieur (OT).

2. Pompe à piston selon la revendication 1, **caractérisée en ce qu'**une course (H) du piston (2) se produit dans la première région (11) du cylindre.

3. Pompe à piston selon l'une quelconque des revendications précédentes, **caractérisée en ce que** la première région (11) est une zone de course du piston (2), dans laquelle le piston (2) se déplace entre un point mort supérieur (OT) et un point mort inférieur (UT) .

4. Pompe à piston selon l'une quelconque des revendications précédentes, **caractérisée en ce que** la deuxième région (12) est disposée à proximité d'un fond de cylindre (8a).

5. Pompe à piston selon l'une quelconque des revendications précédentes, **caractérisée en ce qu'**un point mort supérieur (OT) du piston (2) est disposé à une position située à la transition entre la première région (11) et une région de liaison (13), dans laquelle la région de liaison (13) est disposée entre la première région et la deuxième région (11, 12) du cylindre (8).

6. Pompe à piston selon la revendication 5, **caractérisée en ce que** la région de liaison (13) entre la première région et la deuxième région (11, 12) du cylindre (8) est réalisée sous la forme d'un épaulement qui se rétrécit.

7. Pompe à piston selon la revendication 6, **caractérisée en ce que** la région de liaison (13) entre la première région et la deuxième région (11, 12) du cylindre (8) est formée avec un angle constant (α) par rapport à un axe longitudinal (X-X) de la pompe à piston, dans laquelle l'angle (α) vaut entre 10° et 80°, en particulier entre 20° et 50°, et de préférence encore entre 30° et 45°.

8. Pompe à piston selon l'une quelconque des revendications précédentes, **caractérisée en ce qu'**un évidement (14) est formé sur la deuxième région (12) du cylindre (8), afin de fixer l'élément de rappel (17) pour le piston (2).

9. Pompe à piston selon la revendication 8, **caractérisée en ce que** l'évidement (14) est une gorge périphérique annulaire, qui est disposée directement sur un fond (8a) du cylindre.

10. Installation de frein pour un véhicule, en particulier avec une montée de pression active, comprenant une pompe à piston selon l'une quelconque des revendications précédentes.
